Europäisches Patentamt

European Patent Office

Office européen des brevets

(11) Publication number: **0 487 189 B1**

## EUROPEAN PATENT SPECIFICATION

(45) Date of publication of patent specification: **05.04.95**

(51) Int. Cl.[6]: **G01B 11/10**, G01P 5/20, G01B 11/08

(21) Application number: **91307676.6**

(22) Date of filing: **21.08.91**

(54) **Particle diameter and velocity measuring apparatus.**

(30) Priority: **20.10.90 JP 280575/90**

(43) Date of publication of application:
**27.05.92 Bulletin 92/22**

(45) Publication of the grant of the patent:
**05.04.95 Bulletin 95/14**

(84) Designated Contracting States:
**DE GB**

(56) References cited:
**US-A- 4 251 733**

**JOURNAL OF PHYSICS E: SCIENTIFIC IN-STRUMENTS vol. 11, no. 7, July 1978, ENG-LAND, pp. 639-642 ; G. WIGLEY: 'The sizing of large droplets by laser anemometry'**

**JOURNAL OF PHYSICS E, vol. 7, no. 11, No-vember 1974, ENGLAND, pp. 891-896 ; G. GOUESBET et al. : "A study of turbulence in fluids by an interferential laser-Doppler ve-locity method using validated signal sam-pling"**

(73) Proprietor: **KABUSHIKI KAISHA TOSHIBA**
**72, Horikawa-cho**
**Saiwai-ku**
**Kawasaki-shi**
**Kanagawa-ken 210 (JP)**

(72) Inventor: **Umeda, Toshiya, c/o Intellect. Prop-erty Division**
**Kabushiki Kaisha Toshiba,**
**1-1 Shibaura 1-chome**
**Minato-ku,**
**Tokyo 105 (JP)**
Inventor: **Tatsuno, Kyoichi, c/o Intellect. Prop-erty Division**
**Kabushiki Kaisha Toshiba,**
**1-1 Shibaura 1-chome**
**Minato-ku,**
**Tokyo 105 (JP)**

(74) Representative: **Freed, Arthur Woolf et al**
**MARKS & CLERK,**
**57-60 Lincoln's Inn Fields**
**London WC2A 3LS (GB)**

**PATENT ABSTRACTS OF JAPAN, vol. 11, no. 340 (P-634) 7 November 1987 ; & JP-A-62 123 334**

## Description

This invention relates to a particle diameter/velocity measuring apparatus for measuring the diameter and velocity of a fine particle by using side scattering method.

As one of methods for measuring the diameter and velocity of a fine particle, so-called side scattering method is known which utilizes scattering of light caused by the particle.

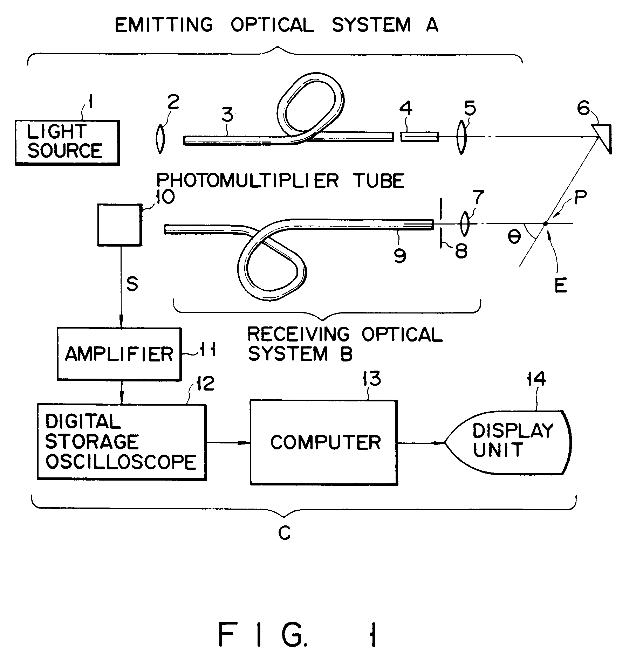

As is shown in Fig. 1, the essential part of a measuring apparatus using side scattering method comprises an emitting optical system A and a receiving optical system B. Light emitted from a light source 1 in the system A passes a lens 2 and an optical fiber 3, and reaches a rectangular waveguide 4. Subsequently, the light is guided to a measuring point P through a lens 5 and a prism 6. The lens 5 and prism 6 are arranged to cause the light output from the waveguide 4 to converge to a point P. The light is then guided into an optical fiber 9 through a lens 7 and a slit member 8. The lens 7 is arranged such that it has a focus thereof positioned on the point P. The slit member 8 has a square aperture formed therein, and shapes the light having passed the lens 7 into a square form, guiding it into the receiving optical system B.

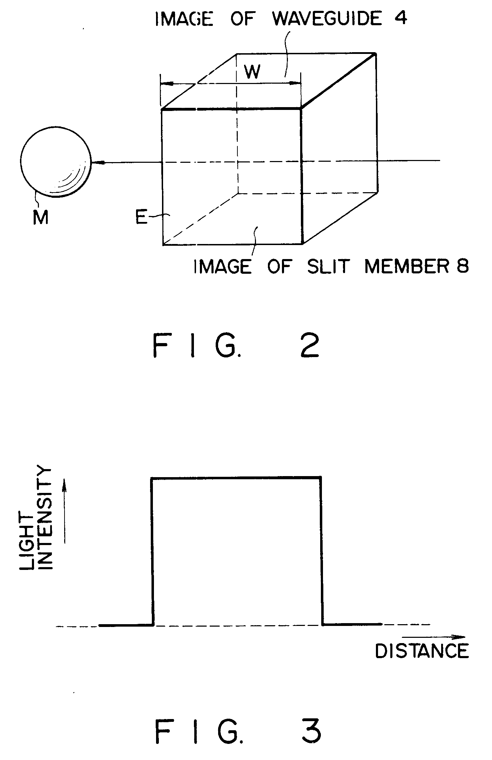

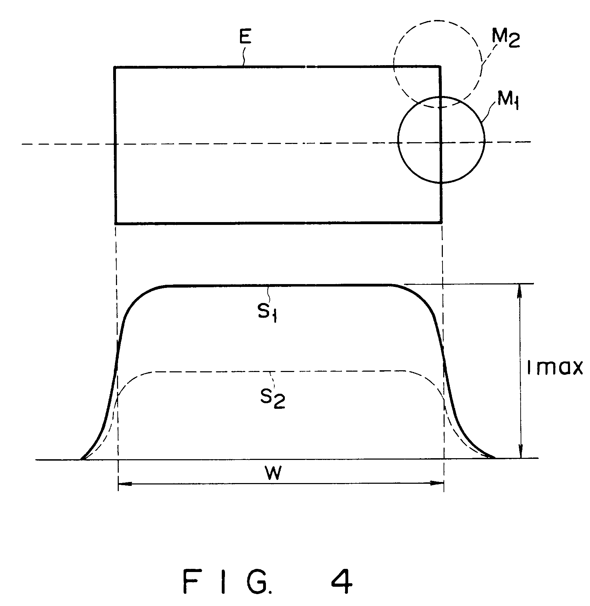

As shown in Fig. 2 if the optical axis of the emitting optical system A intersects at the point P to the optical axis of the receiving optical system B, that is, if an angle $\theta$ is 90°, a cubic measuring volume E is created around the point P. In this case, as shown in Fig. 3, the distribution of light in the measuring volume E is uniform by virtue of the rectangular waveguide 4.

As shown in Fig. 2, in the above-described apparatus, when a particle M to be measured has passed the volume E the light scattered by the particle M is guided into the optical fiber 9 through the lens 7 and slit member 8. Then, the light is guided into an optical detector 10 having a photomultiplier tube, where it is converted to an electrical signal, i.e., to a scattered light pulse signal S corresponding to the intensity of the scattered light. The signal S is supplied to a signal processor 13 via an amplifier 11 and a waveform memory 12. The signal processor 13 calculates the diameter D of the particle M by utilizing a predetermined relationship between the intensity or height I of the signal S and the diameter D. For example, if a particle has a large ratio of the diameter relative to the wavelength of light, the following equation (1) will be satisfied:

$$I = \alpha \times D^2 \qquad (1)$$

where a represents a coefficient.

Further, the relationship between the velocity of the particle M and the width W of the measuring volume E will satisfy the following equation (2):

$$V = W/T \qquad (2)$$

where T represents a period of time required for the particle to pass the measuring volume E.

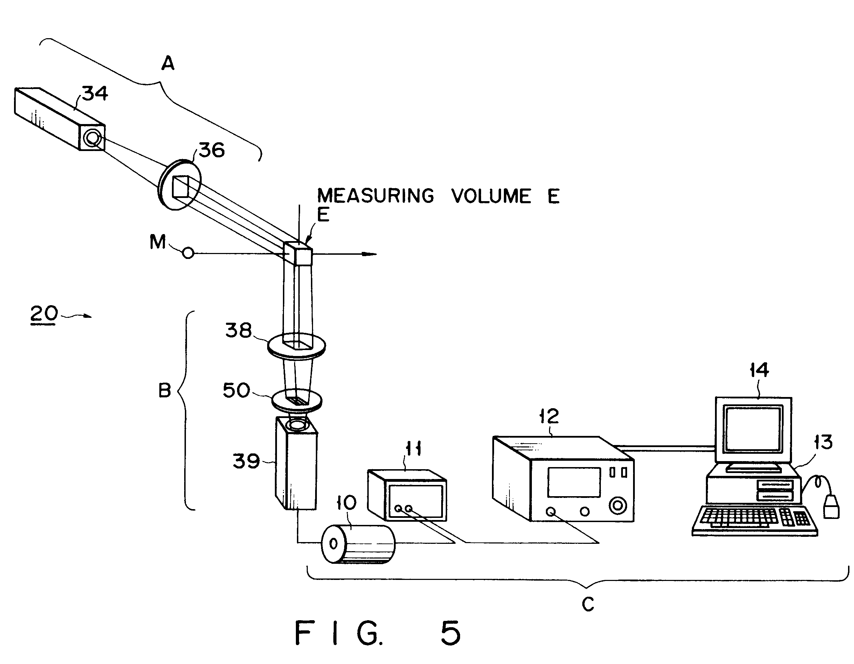

In the above-described particle diameter/velocity measuring apparatus, however, the scattered light pulse Signal S indicative of a particle having passed a peripheral area of the measuring volume E cannot be measured accurately, resulting in an erroneous measurement. The reason why such a measurement error occurs will be explained referring to Fig. 4.

An accurate scattered light pulse signal S1 is obtained when a particle M has passed a central area of the measuring volume E. On the other hand, when a particle M2 (having the same diameter and velocity as the particle M1) has passed a peripheral area of the measuring volume E, a scattered light pulse signal S2 having an intensity lower than that (I max) of the correct signal S1. Thus, the signal processor 13 determines that the particle M2 is smaller than the particle M1, though they have in fact the same diameter.

In addition, when the S/N ratio of a detected scattered light pulse signal is large, thus producing large noise, a clear waveform cannot be obtained. Thus, an erroneous result will inevitably be obtained from a measurement using a method for calculating the velocity of a particle on the basis of the width of a scattered light pulse signal indicative of the particle.

As described above, the conventional apparatus is disadvantageous in that its reliability is reduced when it measures a particle which does not pass a central area of the measuring volume.

It is known from Journal of Physics E: Scientific Instruments, vol. 11, no. 7, July 1978, England, pages 639-642; G Wigley: "The sizing of large droplets by laser anemometry" to provide a laser system having the features specified in the pre-characterising portion of Claim 1. Journal of Physics E, vol. 7, no. 11, November 1974, England, pages 891-896; G Gouesbet et al: "Etude de la turbulence dans les fluides par anemometrie Doppler-laser interferentielle, avec echantillonage valide du signal" also discloses apparatus for determining fluid velocities by using scattered light, taking account of turbulence and dealing with noise reduction. Both of these prior arrangements use a laser Doppler velocimeter, and they check whether a particle has passed a predetermined path in a measuring region.

It is the object of the invention to provide a particle diameter/velocity measuring apparatus capable of accurately measuring the diameter and velocity of a fine particle, without the need for a coherent laser source.

Accordingly, the present invention provides apparatus as defined in Claim 1.

The slit member may be arranged upstream or downstream of the measuring volume E. That is, it may be arranged at the side of the emitting optical system A for emitting light into the measuring volume E, or alternatively at the side of the receiving optical system B for receiving the light having passed the volume E.

The larger the number of the slits, the better the slit member. This is because the number of signal pulses increases in accordance with increase in the number of the slits, and henced the measurement accuracy is enhanced. For example, 26 slits are formed in the partially permeable film.

In the case that the slit member is upstream of the measuring volume E, and since it is made of a partially-permeable film, the light having passed the slit member forms a striped luminous flux and reaches the measuring volume JE. When a particle crosses the striped luminous flux in the measuring volume E, scattered light is detected in those portions of the measuring volume E in which light exists. In one example, the detected scattered light is converted to a voltage signal to obtain a scattered light pulse signal. This pulse signal is compared with a predetermined reference signal by means of the determining and selecting means, and is selected when it corresponds to the reference signal.

The reference signal corresponds to the pulse waveform and pulse number of the scattered light pulse signal obtained when a particle has passed a central area of the measuring volume E. By comparing a detected scattered light pulse signal with the reference signal, it is determined whether or not a particle has passed the central area of the volume E. If it is determined that the particle has passed the central area, the detected scattered light pulse signal is selected as calculation data. On the other hand, if it is determined that the particle has not passed the central area, the pulse signal is not used. The pulse signal contains the pulse number N of each pulse, the waveform of each pulse, and the frequency f of the pulse array. The diameter D of a particle is calculated from the pulse number N and a pulse height I. Further, the velocity V of the particle is obtained from the frequency f of the pulse array and the width W of the measuring volume E. As described above, only the scattered light pulse signal of a particle having passed the central area of the measuring volume E is used as calculation data, which enables an accurate measurement of a particle diameter, and also enables an accurate measurement of a particle velocity even in a case where the pulse signal has an undesirable S/N ratio.

This invention can be more fully understood from the following detailed description when taken in conjunction with the accompanying drawings, in which:

Fig. 1 is a block diagram, showing the entire arrangement of a conventional particle diameter/velocity measuring apparatus;

Fig. 2 is a perspective view showing a measuring volume E and a particle M to be measured, which is useful in explaining the measurement principle of side scattering method;

Fig. 3 is a view showing a light intensity distribution, which is useful in explaining the measurement principle of side scattering method;

Fig. 4 is a view, showing waveforms of scattered light pulse signals corresponding to particles having passed central and peripheral area of the measuring volume E, respectively, and useful in explaining the cause of a measurement error obtained by the conventional apparatus;

Fig. 5 is a block diagram of a particle diameter/velocity measuring apparatus according to a first embodiment of the present invention;

Fig. 6 is a partial sectional view of a measuring probe employed in the apparatus;

Fig. 7 is a perspective view of a rectangular waveguide;

Fig. 8 is a longitudinal sectional view showing a rectangular waveguide and a partially-permeable slit member employed in a receiving optical system B;

Fig. 9 is a graph showing a light intensity distribution in a cross section taken along line IX - IX;

Fig. 10 is a view, useful in explaining cases where a particle M passes respective courses I - III in the measuring volume E according to the first embodiment of the invention;

Fig. 11 is a view showing a waveform of a scattered light pulse signal obtained when the particle M passes the course I in the measuring volume E;

Fig. 12 is a view showing a waveform of a scattered light pulse signal obtained when the particle M passes the course II in the measuring volume E;

Fig. 13 is a view showing a waveform of a scattered light pulse signal obtained when the particle M passes the course III in the measuring volume E;

Fig. 14 is a diagram showing a measuring volume E according to a second embodiment of the invention;

Fig. 15 is a graph showing the relationship between the height of a detected scattered light pulse signal and the diameter of a particle;

Fig. 16 is a block diagram, showing the entire arrangement of an apparatus according to a third embodiment of the invention; and

Fig. 17 is a longitudinal sectional view showing a rectangular waveguide and a partially-permeable slit member employed in an emitting optical system A.

This invention will be explained in detail with reference to the accompanying drawings showing embodiments thereof.

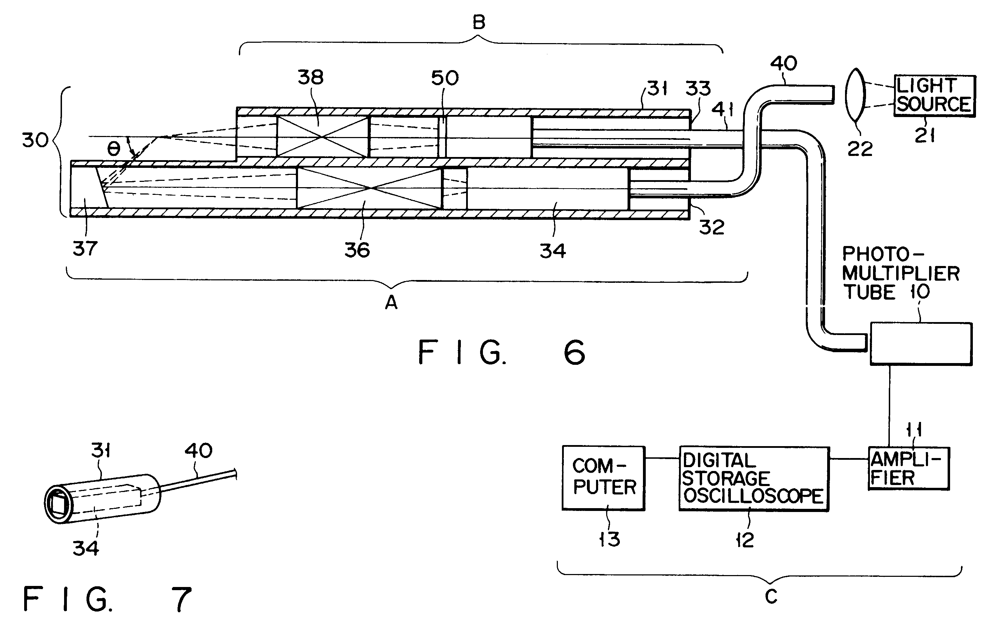

As is shown in Figs. 5 and 6, a particle diameter/velocity measuring apparatus 20 comprises an emitting optical system A, a receiving optical system B, and a processing system C. An incoherent light source such as an Xe lamp is used as light source 21 of the system A. Light emitted from the light source 21 is guided into an optical fiber 40 through a lens 22, and then guided to an area in the vicinity of a measuring volume P by means of a probe 30. As is shown in Figs. 6 and 7, the probe 30 consists of rectangular waveguides 34, lens 36 and 38, a mirror 37, a slit member 50, and a protecting case 31 containing those components 34, 36, 38, 37, and 50. The protecting case 31 has openings 32 and 33 through which the optical fiber 40 and an optical fiber 41 are inserted. The inserted ends of the fiber 40 is connected to the rectangular waveguide 34. The lens 36 is provided on the outlet side of the waveguide 34. The mirror 37 is located downstream of the lens 36, to thereby reflect light having passed the lens 36. The lens 36 and mirror 37 are arranged to cause the light output from the waveguide 34 to converge to a point P in a measuring volume E.

A desired number of particles M are introduced from a particle supply (not shown) into the measuring volume E at a desired speed in a desired direction.

In the receiving optical system B, the light focused on the point P is guided into a optical fiber 41 through the lens 38 and slit member 50. The lens 38 is arranged such that it has a focus thereof positioned on the point P. The point P is formed in the measuring volume E. Where an angle $\theta$ formed by the optical axes of the emitting optical system A and receiving optical system B is, for example, the angle $\theta$ is 90°, a rectangular parallelepipedic measuring volume is formed around the point P. In general, the smaller the intersecting angle $\theta$, a sensitivity of detector for detecting the scattered light increases. In this embodiment, the intersecting angle $\theta$ is set at 30°.

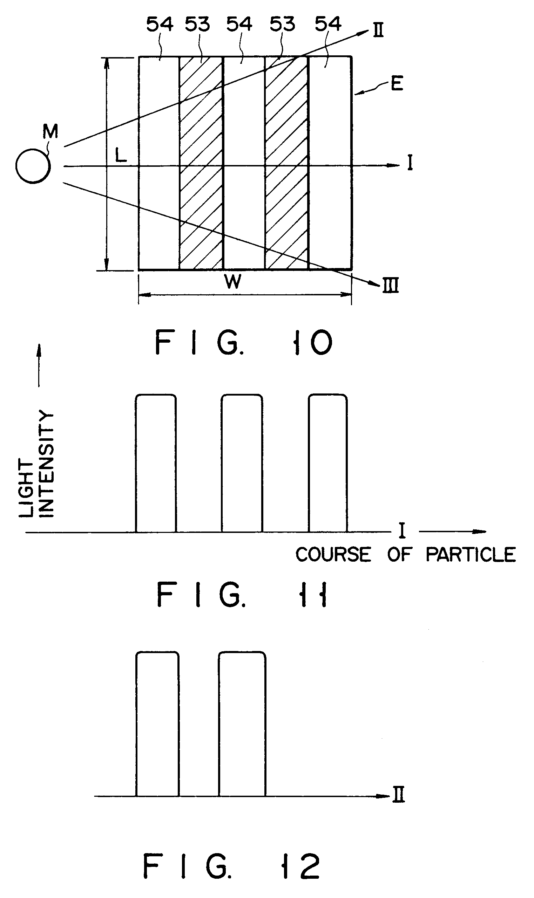

As is shown in Fig. 6, the slit member 50 is arranged at the inlet side end of the optical fiber 41 of the receiving optical system B. The slit member 50 (Fig. 10) is formed of a rectangular film which has two strip masks each extending from an end of the film to the other end, and window portions extending alternately and parallel with the masks, and having the same width as the masks. The mask strips interrupt light, while the window portions allow light to pass.

A light detector 10 incorporated in the processing system C is provided at the outlet side of the optical fiber 41 of the receiving optical system B, and detects light to convert it to a voltage signal.

The output side of the light detector 10 is connected to the input side of a digital storage oscilloscope 12 via an amplifier 11. The output side of the oscilloscope 12 is connected to the input side of a computer 13. A reference signal is prestored in the oscilloscope 12. The reference signal contains the same pulse waveform and pulse number as those of a scattered light pulse signal obtained when a particle M has passed a central area of the measuring volume E. The computer 13 compares a signal by the digital storage oscilloscope 12 with the reference signal stored in the memory, thereby determining whether or not the particle M has passed the central area of the volume E. The output side of the computer 13 is connected to a display 14.

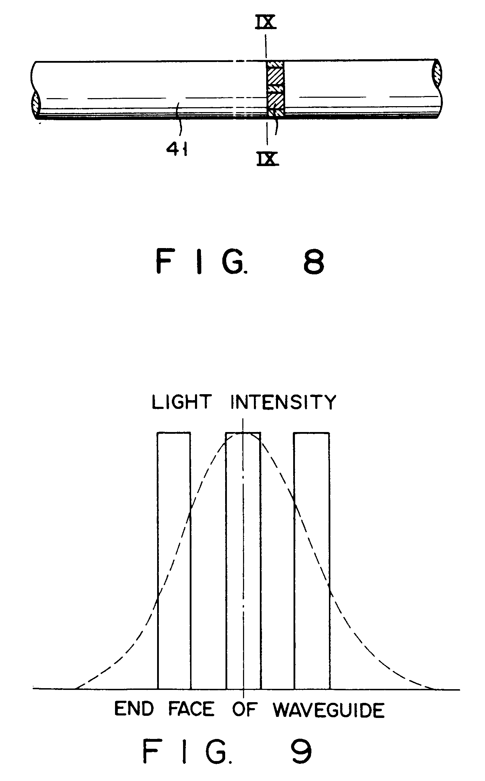

The functions of the rectangular waveguide 34 and the slit member 50 will be explained referring to Fig. 9. If the waveguide 34 is not employed, the light will expand to form a cone, and will have, at the cross section taken along line IX - IX, an intensity showing a Gaussian distribution as indicated by the broken curve line in Fig. 9. If, on the contrary, the waveguide 34 and slit member 50 are employed, the light will pass the courses indicated by the solid lines in Fig. 7 through the waveguide 34, and three light pulses of the same height and of the same width will obtained at the IX - IX cross section, as indicated by the solid lines in Fig. 9.

Then, the measuring volume E will be explained with reference to Fig. 10. That aspect of the volume E which is viewed from the receiving optical system B side appears to have a banded structure, since part of the light is shaded by the slit member 50. That is, the slit member forms two pseudo shading areas (hatched portions) 53 and three fully-permeable areas 54 arranged alternately with the areas 53. The passing course of the particle M in the measuring volume E is perpendicular to the line of the longitudinal direction of the pseudo shading areas 53.

It will now be explained with reference to Figs. 11 - 13 how the particle M is detected when it has passed various courses.

The particle M to be measured is guided to the measuring volume E, and crosses the two pseudo shading areas 53 and three fully-permeable areas 54. When the particle M passes the course I shown in Fig. 10, i.e., the central area of the volume E, a scattered light pulse signal having three pulses of the same width and height is detected by the detector 10, as is shown in Fig. 11. This pulse signal correspond to the reference signal prestored in the digital storage oscilloscope 11, and hence are used in the computer 13 as calculation data for obtaining the diameter D and velocity V of the particle M.

When the particle M passes the course II shown in Fig. 10, a scattered light pulse signal having only two pulses of the same width and height is detected, as is shown in Fig. 12. Since this pulse signal does not correspond to the reference signal, they are not used as calculation data.

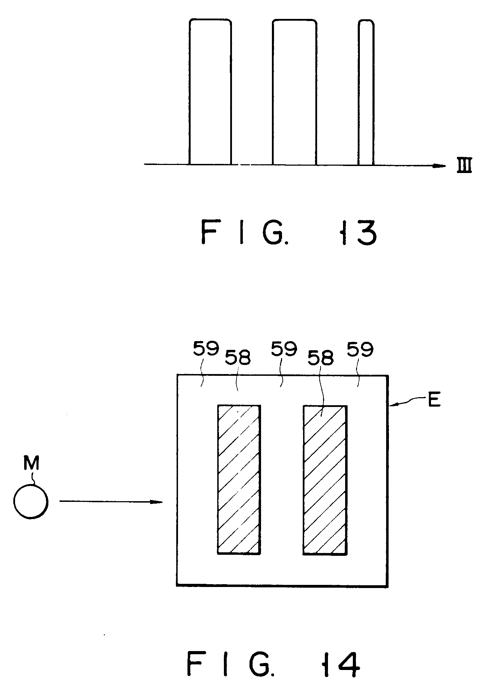

When the particle M passes the course III shown in Fig. 10, a scattered light pulse signal having three pulses is detected, as is shown in Fig. 13. Since one of the pulses has a width smaller than the others, the signal does not correspond to the reference signal, and is not used as calculation data.

As described above, in the present invention, only the data which corresponds to the reference signal is selected as calculation data, which enables the apparatus to obtain more reliable measurement results than the conventional apparatus. In particular, a variation in the pulse width and pulse number of a signal obtained when the particle M passes a peripheral area of the measuring volume E is easily detected, and the signal is omitted in calculation, which makes it possible to obtain an accurate measurement result.

A second embodiment of the invention will now be explained. Explanation of parts of the second embodiment common to those of the first embodiment are omitted here.

In a slit member (not shown) provided in the receiving optical system B of the second embodiment, the masks each have a length shorter than the slit member, and windows at both longitudinal opposite ends. This being so, the measuring volume E has pseudo shading areas 58, and a fully-permeable area 59 extending over to the longitudinal opposite ends of the pseudo shading areas 58, as is shown in Fig. 14.

In the measuring volume E formed as above, when the particle M has passed a peripheral area of the volume E, i.e, when a half of the particle M has passed the volume E, only one of the peaks of the waveform of the particle is measured, so that it is easily determined whether or not the particle has passed a central area of the volume E.

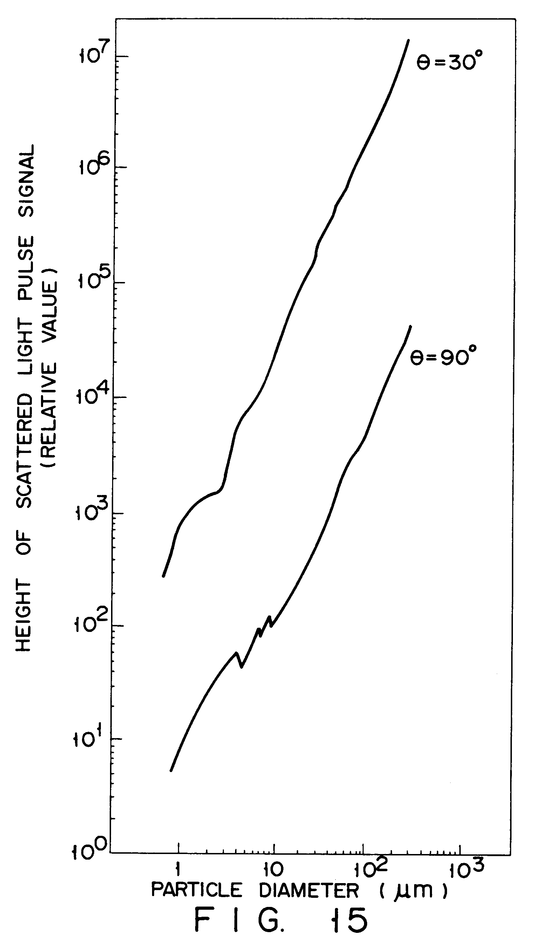

Fig. 15 is a graph showing the influence of the intersecting angle θ, formed by the optical axes, upon the detection sensitivity in a case where the ratio of the diameter D of the particle M to a predetermined wavelength of light is large. The abscissa indicates the particle diameter, while the ordinate indicates the relative height of the scattered light pulse signal. As is evident from the graph, the pulse signal height is substantially proportional to a value obtained by squaring the particle diameter. By utilizing this relationship, the computer 13 calculates the particle diameter. Further, it can be understood from the figure that the height of the scattered light pulse signal is higher and hence its detection accuracy is much higher in a case where the intersecting angle θ is 30° than in a case where it is 90°.

As is described above, according to the first and second embodiments, the measuring apparatus can provide a high measuring accuracy only by incorporating therein the slit member 50 serving as partially-permeable film of the receiving optical system B.

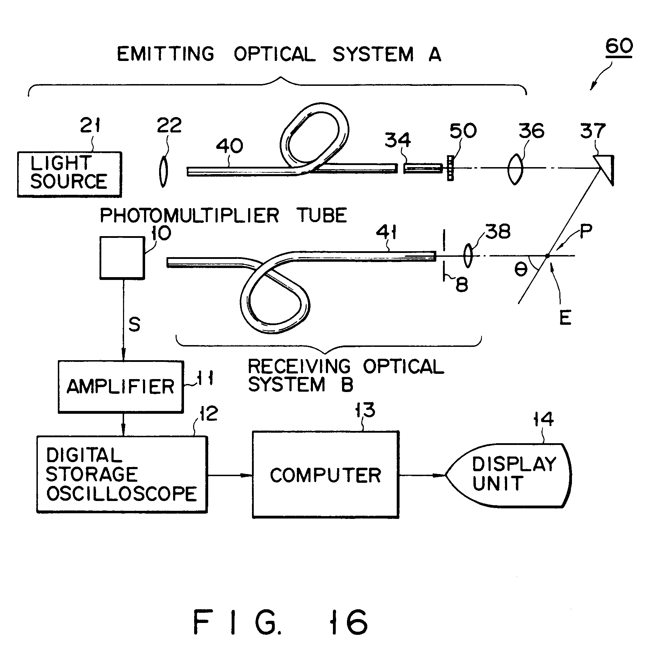

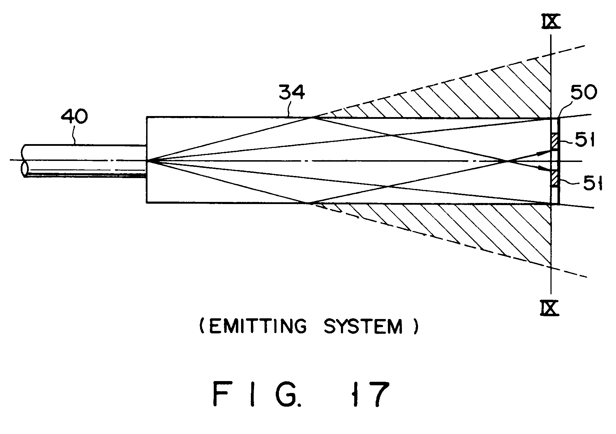

A third embodiments of the invention will be explained referring to Figs. 16 and 17.

An apparatus 60 according to the third embodiment is similar to those of the first and second embodiments except in that the slit member 50 serving as partially-permeable film is provided in the emitting optical system A.

As is shown in Fig. 17, the slit member 50 is provided in contact with the outlet end of the rectangular waveguide 34 of the emitting optical system A. The light guided through the optical fiber 40 is transferred in the waveguide 34, as indicated by the solid lines in Fig. 17. From the cross section taken along line IX - IX, three light pulses can be obtained which have the same width and height as indicated by the solid lines in Fig. 9. Also in this case, the measuring volume E is viewed as shown in Fig. 10, from the side of the receiving optical system B.

In summary, in the present invention, it is determined from the pulse waveform and pulse number of a scattered light pulse signal generated when a particle has passed the measuring volume, whether or not the particle has passed a central area of the measuring volume E. Then, only the data obtained when the particle has passed the central area is selected as calculation data, which enables the diameter and velocity of the particle to be measured with high accuracy.

**Claims**

1. Apparatus for measuring the diameter and velocity of a particle (M), comprising:
   a light source (21);
   a light transfer system (A) for guiding light emitted from the light source (21) to a measuring volume (E);
   a slit member (50) for partially permeating the light before it reaches the measuring volume (E) or after it passes the same;
   scattered light pulse signal detecting means (10) for detecting, as a pulse signal, the light scattered by the particle (M) passing the measuring volume (E);

determining and selecting means (12) for determining whether or not the pulse waveform and pulse number of a scattered light pulse signal detected by the detecting means (10) are normal, and then selecting the scattered light pulse signal when it is determined to be normal; and

calculating means (13) for calculating at least one of the diameter and velocity of the particle (M) on the basis of the selected signal;

characterised in that:

the light source (21) emits incoherent light;

the light transfer system (A) has a rectangular waveguide (34) for guiding the light emitted from the light source (21) to the measuring volume (E);

the slit member (50) is made of a partially-permeable film; and

the slit member (50) is located downstream of the rectangular waveguide (34) in the optical path on the light transfer system (A) and has a structure which forms at least two light-shaded regions (53,58) in a centre region of the measuring volume (E);

the determining and selecting means (12) determining whether or not the pulse waveform and the pulse number of a scattered light pulse signal detected by the detecting means (10) are normal if they are in accordance with the result expected from the passage of a particle across both or all the light-shaded regions (53,58).

2. Apparatus according to claim 1, in which the slit member (50) is formed such that a plurality of shading areas (53) each having a predetermined width extend in the measuring volume (E) from an end thereof to the other end.

3. Apparatus according to claim 1, characterised in that the slit member (50) is formed such that a plurality of shading areas (58) each having a predetermined width extend in the measuring volume (E) except for a peripheral area (59) thereof.

4. Apparatus according to claim 1, 2 or 3, further comprising an optical fibre (41) interposed between the measuring volume (E) and the scattered light pulse signal detecting means (10), and wherein the slit member (50) is provided on the inlet side of the optical fibre (41).

5. Apparatus according to any preceding claim, in which the slit member (50) is provided on the outlet side end of the rectangular waveguide (34).

6. Apparatus according to any preceding claim, in which the determining and selecting means (12) prestores a reference signal for determining whether the scattered light pulse signal is normal.

**Patentansprüche**

1. Vorrichtung zum Messen des Durchmessers und der Geschwindigkeit eines Teilchens (M), die folgendes umfaßt:

eine Lichtquelle (21);

ein Lichtübertragungssystem (A) zum Leiten des von der Lichtquelle (21) emittierten Lichts in ein Meßvolumen (E);

ein Schlitzglied (50) zum teilweisen Durchlassen des Lichts bevor es das Meßvolumen (E) erreicht oder nachdem es dasselbe durchläuft;

eine Detektionseinrichtung für Streulicht-Impulssignale (10) zum Detektieren des vom durch das Meßvolumen (E) laufenden Teilchen (M) gestreuten Lichts als ein Impulssignal;

eine Bestimmungs- und Auswahleinrichtung (12) zur Bestimmung, ob die Impulswellenform und die Impulsanzahl eines durch die Detektionseinrichtung (10) detektierten Streulicht-Impulssignals normal sind oder nicht, und dann zum Auswahlen des Streulicht-Impulssignals, wenn es als normal bestimmt wird; und

eine Berechnungseinrichtung (13) zur Berechnung wenigstens eines von Durchmesser und Geschwindigkeit des Teilchens (M) auf der Grundlage des ausgewählten Signals;

dadurch gekennzeichnet, daß:

die Lichtquelle (21) inkohärentes Licht emittiert;

das Lichtübertragungssystem (A) einen rechteckigen Wellenleiter (34) zum Leiten des von der Lichtquelle (21) emittierten Lichts in das Meßvolumen (E) besitzt;

das Schlitzglied (50) aus einem teilweise durchlässigen Film besteht; und

das Schlitzglied (50) sich im Lichtübertragungssystem (A) auf dem optischen Weg an der Austrittsseite des rechteckigen Wellenleiters (34) befindet und eine Struktur hat, die in einem mittigen Bereich des Meßvolumens (E) wenigstens zwei lichtabgeschirmte Bereiche (53, 58) bildet;

die Bestimmungs- und Auswahleinrichtung (12) bestimmt, ob die Impulswellenform und die Impulsanzahl eines von der Detektionseinrichtung (10) detektierten Streulicht-Impulssignals normal sind oder nicht, falls sie in Übereinstimmung mit dem Ergebnis sind, das beim Durchgang eines Teilchens durch beide oder alle lichtabgeschirmten Bereiche (53, 58) erwartet wird.

2. Vorrichtung gemäß Anspruch 1, worin das Schlitzglied (50) so geformt ist, daß sich im Meßvolumen (E) von dessen einem Ende zu dessen anderen Ende eine Vielzahl von Schattenbereichen (53) erstrecken, von denen jeder eine vorherbestimmte Breite hat.

3. Vorrichtung gemäß Anspruch 1, dadurch gekennzeichnet, daß das Schlitzglied (50) so geformt ist, daß sich im Meßvolumen (E) ausgenommen dessen Randbereich (59) eine Vielzahl von Schattenbereichen (58) erstrecken, von denen jeder eine vorherbestimmte Breite hat.

4. Vorrichtung gemaß Anspruch 1, 2 oder 3, die weiterhin eine zwischen dem Meßvolumen (E) und der Detektionseinrichtung für Streulicht-Impulssignale (10) eingefügte optische Faser (41) umfaßt, und worin das Schlitzglied (50) auf der Einlaßseite der optischen Faser (41) bereitgestellt wird.

5. Vorrichtung gemäß jeglichem vorangehenden Anspruch, worin das Schlitzglied (50) an der Auslaßseite des rechteckigen Wellenleiters (34) bereitgestellt wird.

6. Vorrichtung gemäß jeglichem vorangehenden Anspruch, worin die Bestimmungs- und Auswahleinrichtung (12) ein Bezugssignal zur Bestimmung, ob das Streulicht-Impulssignal normal ist, vorspeichert.

**Revendications**

1. Appareil de mesure du diamètre et de la vitesse d'une particule (M), comprenant:
   une source de lumière (21);
   un système de transfert de lumière (A) pour guider la lumière émise depuis la source de lumière (21) sur un volume de mesure (E);
   un élément de fente (50) pour laisser passer partiellement la lumière avant qu'elle n'atteigne le volume de mesure (E) ou après qu'elle l'a passé;
   un moyen de détection de signal pulsé de lumière diffusée (10) pour détecter en tant que signal pulsé la lumière diffusée par la particule (M) passant dans le volume de mesure (E);
   un moyen de détermination et de sélection (12) pour déterminer si oui ou non la forme d'onde d'impulsion et le nombre d'impulsions d'un signal impulsionnel de lumière diffusée détecté par le moyen de détection (10) sont normaux, puis pour sélectionner le signal pulsé de lumière diffusée lorsqu'il est déterminé comme étant normal; et
   un moyen de calcul (13) pour calculer au moins un élément pris parmi le diamètre et la vitesse de la particule (M) sur la base du signal sélectionné,
   caractérisé en ce que:
   la source de lumière (21) émet une lumière incohérente;
   le système de transfert de lumière (A) comporte un guide d'ondes rectangulaire (34) pour guider la lumière émise depuis la source de lumière (21) sur le volume de mesure (E);
   l'élément de fente (50) est constitué par un film laissant partiellement passer la lumière; et
   l'élément de fente (50) est positionné à l'aval du guide d'ondes rectangulaire (34) dans le chemin optique du système de transfert de lumière (A) et il présente une structure qui forme au moins deux régions à ombrage de lumière (53, 58) dans une région centrale du volume de mesure (E);
   le moyen de détermination et de sélection (12) déterminant si oui ou non la forme d'onde pulsée et le nombre d'impulsions d'un signal pulsé de lumière diffusée détecté par le moyen de détection (10) sont normaux et s'ils sont conformes au résultat attendu à l'issue du passage d'une particule au travers de deux régions à ombrage de lumière (53, 58) ou de toutes.

2. Appareil selon la revendication 1, dans lequel l'élément de fente (50) est formé de telle sorte qu'une pluralité de zones d'ombrage (53) dont chacune présente une largeur prédéterminée s'étendent dans le volume de mesure (E) depuis une extrémité de celui-ci jusqu'à son autre extrémité.

3. Appareil selon la revendication 1, caractérisé en ce que l'élément de fente (50) est formé de telle sorte qu'une pluralité de zones d'ombrage (58) dont chacune présente une largeur prédéterminée s'étendent dans le volume de mesure (E) à l'exception d'une zone périphérique (59) de celui-ci.

4. Appareil selon la revendication 1, 2 ou 3, comprenant en outre une fibre optique (41) interposée entre le volume de mesure (E) et le moyen de détection de signal pulsé de lumière diffusée (10) et dans lequel l'élément de fente (50) est prévu sur le côté d'entrée de la fibre optique (41).

5. Appareil selon l'une quelconque des revendications précédentes, dans lequel l'élément de fente (50) est prévu sur l'extrémité de côté de sortie du guide d'ondes rectangulaire (34).

6. Appareil selon l'une quelconque des revendications précédentes, dans lequel le moyen de détermination et de sélection (12) pré-stocke un signal de référence permettant de déterminer si oui ou non le signal pulsé de lumière diffusée est normal.

EMITTING OPTICAL SYSTEM A

PHOTOMULTIPLIER TUBE

RECEIVING OPTICAL SYSTEM B

LIGHT SOURCE

AMPLIFIER

DIGITAL STORAGE OSCILLOSCOPE

COMPUTER

DISPLAY UNIT

F I G. 1

IMAGE OF WAVEGUIDE 4

W

M

E

IMAGE OF SLIT MEMBER 8

F I G. 2

LIGHT INTENSITY

DISTANCE

F I G. 3

F I G. 4

MEASURING VOLUME E

F I G. 5

EP 0 487 189 B1

F I G.  6

F I G.  7

**F I G. 8**

LIGHT INTENSITY

END FACE OF WAVEGUIDE

**F I G. 9**

**F I G. 1O**

**F I G. 11**

LIGHT INTENSITY

COURSE OF PARTICLE

**F I G. 12**

F I G. 13

F I G. 14

F I G. 15

EMITTING OPTICAL SYSTEM A

<u>60</u>

21 22 40 34 50 36 37

LIGHT SOURCE

PHOTOMULTIPLIER TUBE

10 41 38

P

θ

8

E

S

AMPLIFIER 11

RECEIVING OPTICAL SYSTEM B

DIGITAL STORAGE OSCILLOSCOPE 12

COMPUTER 13

DISPLAY UNIT 14

F I G. 16

(EMITTING SYSTEM)

FIG. 17